# EUROPEAN PATENT APPLICATION

(11) **EP 1 234 760 A2**
(43) Date of publication of application: **28.08.2002**
(21) Application number: 02004275.0
(22) Date of filing: 27.02.2002
(51) Int. Cl.: B62K 25/28

(54) **Automatic suspension lockout for bicycles**

(30) Priority: 27.02.2001 US 271411 P
(71) Applicant: MULTIMATIC INC., Markham, Ontario L3R 5E5 (CA)
(72) Inventor: Holt, Laurence James, Uxbridge, Ontario L9P 1R2 (CA); Hunton, P.J., Cambridge, Ontario N1R 5S5 (CA)
(74) Representative: Maiwald Patentanwalts GmbH

(57) **Abstract**

An automatic suspension lockout assembly for bicycles comprises a pedal (1), crankarm, chainwheel (2), crankshaft and bearing (3) assembly compliantly mounted to a frame (9) such that a combination of pedaling forces and uphill bicycle inclination creates a small motion suitable for controlling a hydraulic valve (13) in a shock absorber (11) of the bicycle suspension assembly resulting in lockout of the suspension.

## Description

### FIELD OF THE INVENTION

This invention applies to bicycles, more particularly to bicycles that utilize wheel suspension similar to that of a car or motorcycle, and the automatic lockout of the suspension when required to optimize the bicycle's operation.

### DESCRIPTION OF THE PRIOR ART

Wheel suspension, similar to that utilized by cars and motorcycles, has been widely adopted on the class of off-road bicycles known as mountain bikes. Mountain bike suspension isolates the wheel assembly from the bike and rider by means of a spring and shock absorber controlled by some form of linkage arrangement. These linkage systems tend to imitate motorcycle practice with telescoping front forks and a rear swingarm with linkage actuation of the spring and shock absorber.

The most significant drawback of suspended bicycles is their tendency to dissipate valuable pedaling energy through the spring and shock absorber. As the rider imparts force into the pedals the vertical vector component causes the bicycle to "bob" on its suspension. This undesirable suspension movement dissipates a significant percentage of the imparted pedaling energy and can significantly reduce the bicycle's overall motive efficiency.

Many bicycles utilize complex rear suspension linkages and optimized crankshaft and linkage pivot locations to reduce the effect of the pedaling forces on the suspension. However, it is impossible to completely eliminate the pedaling energy dissipation into the suspension.

A widely adopted solution to this problem is the introduction of a suspension lockout that the rider can operate when desired. The term lockout refers to one or more of the following elements in combination: mechanically limiting the amount of suspension travel; increasing the damping response of the shock absorber - most importantly in compression; increasing the force-displacement rate of the suspension; increasing the spring preload of the suspension. Normally the rider would engage the lockout during heavy pedaling as required by hill climbing or acceleration but could disengage it for coasting and downhill operation over bumpy terrain. The most common form of bicycle suspension lockout consists of a valve that limits the flow of oil past the shock absorber's main piston. Normally the shock absorber passes fluid between two chambers past a main piston that is moving in response to the suspension motion. This fluid is variably throttled to achieve the correct damping response. By reducing or blocking the throttle area, a significant increase in damping response is created that significantly slows the suspension movement. The majority of these systems utilize direct acting mechanical activation via a cable routed from a convenient location for the rider to the front or rear shock absorbers, or to both. Some systems utilize electrical activation.

The limitation of the manually activated suspension lockout is that it requires the constant attention of a rider already busy with numerous other tractive and control functions. Additionally, the more common mechanically activated systems require significant effort to operate.

It would therefore be advantageous to automatically lock out the suspension system when required, specifically during uphill riding and rapid acceleration, when the rider is pedaling hard.

U.S. Patent No. 5,354,085 to Gally, describes a suspension system where the locking device is automatically actuated by way of a drive force sensor, which permits automatic lockout as increased force is exerted on the pedals.

This device, however, does not have the ability to sense the inclination angle of the bicycle.

### SUMMARY OF THE INVENTION

Accordingly, it would be very advantageous to sense, and adjust the lockout pedaling force threshold for, the inclination angle of the bike so that lockout is more easily achieved during uphill riding and more difficult to achieve during downhill riding.

The present invention is targeted at automatically locking out the front, rear, or both, wheel suspensions of a bicycle when the rider applies pedaling energy above a preset pedaling force threshold but allows the suspension to operate fully below that threshold. As referred to hereinafter, a crank assembly means a pedal, crankarm, crankshaft, chainwheel and bearing assembly.

In accordance with a principal aspect of the invention, an automatic suspension lockout assembly for bicycles comprises a crank assembly compliantly mounted to a frame such that a combination of pedaling forces and uphill bicycle inclination creates a small motion suitable for controlling a hydraulic valve in a shock absorber of the bicycle suspension assembly resulting in lockout of the suspension.

In a further aspect of the invention, an automatic suspension lockout assembly for bicycles comprises a crank assembly mounted in a bottom bracket adapted to be rotatably attached to a frame via a mounting pivot; a chain adapted for power transfer linking the chainwheel to a rear wheel assembly; and a resilient member adapted to create a predetermined stiffness between the bottom bracket and the frame so that rotational motion of the bottom bracket is limited; such that the relative movement between the bottom bracket and the frame caused by a tension force in the chain during pedaling is transferred via a linkage to a hydraulic valve in the suspension shock absorber.

In further aspects of the invention:
(a) the resilient member comprises a coil spring configured with a force/displacement rate capable of limiting the rotational motion of the bottom bracket to less than twenty-five degrees at full pedaling effort;
(b) a control damper is attached in parallel to the coil spring to slow valve motion and reduce oscillation caused by varying chain tension throughout a pedal stroke;
(c) an adjuster mechanism, attached in parallel to the coil spring, is adapted to impart preload on the spring and thereby set a pedaling force threshold required to induce rotary motion of the bottom bracket relative to the frame;
(d) the adjuster mechanism comprises a screw acting directly on the coil spring to impart preload;
(e) the linkage comprises a rod attached directly to the bottom bracket and connected to a rocker on the shock absorber that directly acts on a valve push rod internal to the shock absorber;
(f) the linkage comprises a cable attached directly to the bottom bracket and connected directly to a valve push rod internal to the shock absorber.

In a further aspect of the invention, the automatic suspension lockout assembly for bicycles comprises a crank assembly eccentrically mounted internally in a bottom bracket rigidly attached to the frame; a chain adapted for power transfer linking the chainwheel to a rear wheel assembly; an elastomeric material adapted to attach the crank assembly to the bottom bracket so that eccentric rotational motion of said assembly is limited; such that movement of the crank assembly relative to the bottom bracket and frame caused by a tension force in the chain during pedaling is transferred via a linkage to a hydraulic valve in a suspension shock absorber to lock out suspension movement.

In further aspects of the invention:
(a) the elastomeric material comprises synthetic rubber configured with a force/displacement rate adapted to limit the rotational motion of the bottom bracket to less than twenty-five degrees at full pedaling effort;
(b) the elastomeric material comprises thermoplastic elastomer configured with a force/displacement rate adapted to limit the rotational motion of the bottom bracket to less than twenty-five degrees at full pedaling effort;
(c) an adjuster mechanism attached in parallel to the elastomeric material is adapted to impart preload on the elastomeric material and thereby set a pedaling force threshold required to induce rotary motion of the bottom bracket relative to the frame;
(d) the adjuster mechanism comprises a screw bridging the crank assembly and the bottom bracket;
(e) the linkage comprises a rod attached directly to the crank assembly and connected to a rocker on the shock absorber that directly acts on a valve push rod internal to the shock absorber;
(f) the linkage comprises a cable attached directly to the crank assembly and connected directly to a valve push rod internal to the shock absorber.

Further aspects of the invention will become apparent from the following description.

### BRIEF DESCRIPTION OF THE DRAWINGS

FIG. 1 is a schematic, side, elevation view of a typical prior art full suspension bicycle;
FIG. 2 is a schematic, side, elevation view of a bicycle incorporating the automatic suspension lockout system of the present invention;
FIG. 3 is a schematic, partial side view of a bicycle illustrating the components associated with the automatic suspension lockout system of the present invention;
FIGS. 4A and 4B are fragmentary, sectional views of the components associated with the automatic suspension lockout system of the present invention;

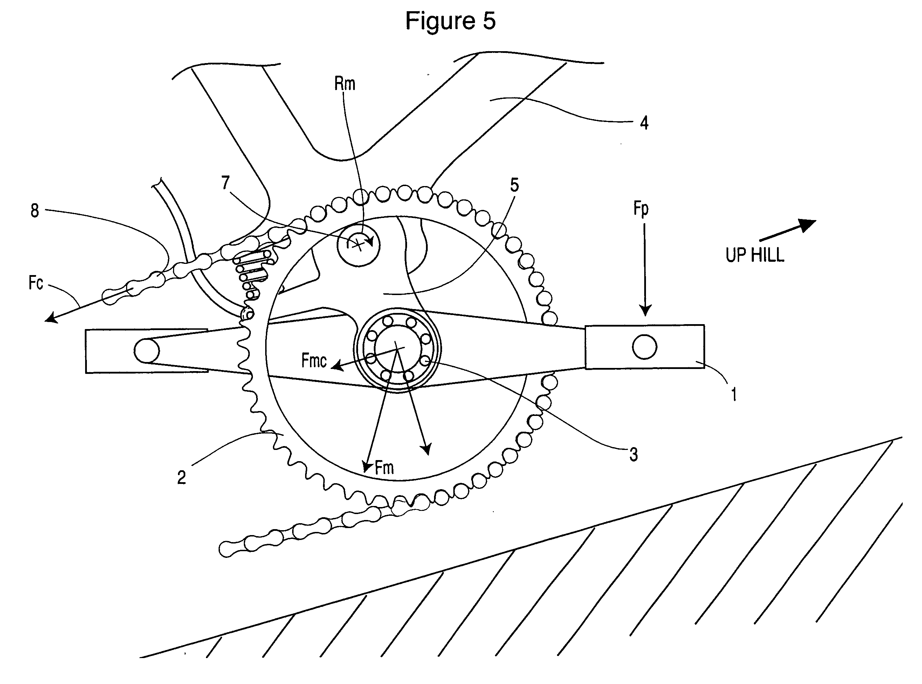

FIG. 5 is a schematic side view of a bicycle incorporating the automatic suspension lockout system of the present invention illustrating the force system that occurs during an uphill pedaling condition;

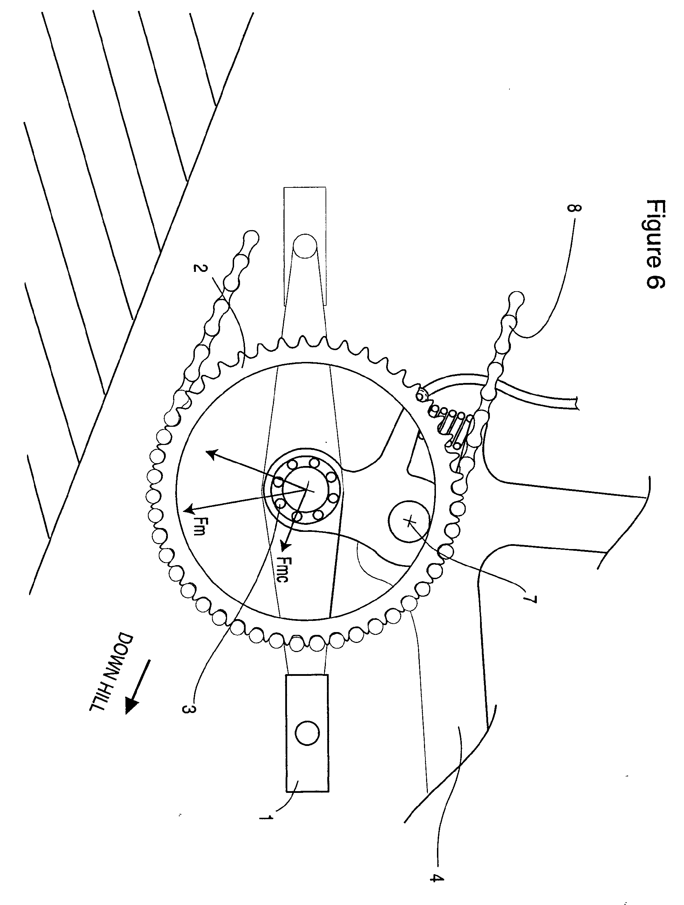

FIG. 6 is a schematic side view of a bicycle incorporating the automatic suspension lockout system of the present invention illustrating the force system that occurs during a downhill condition.
FIG. 7 is a schematic partial side view illustrating the components associated with an alternative embodiment of the present invention;
FIG. 8 is a schematic partial side view illustrating the components associated with a further alternative embodiment of the present invention.

### DETAILED DESCRIPTION OF THE INVENTION

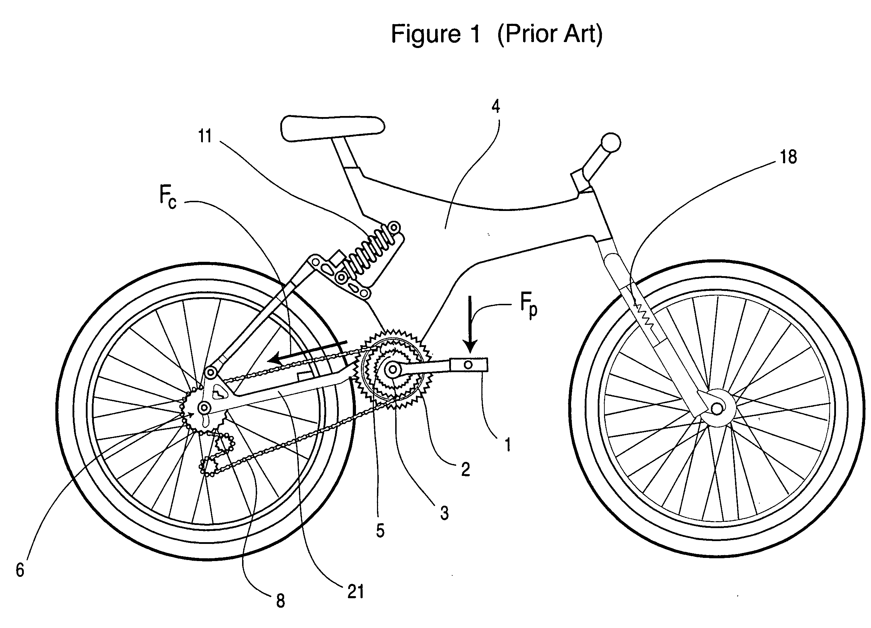

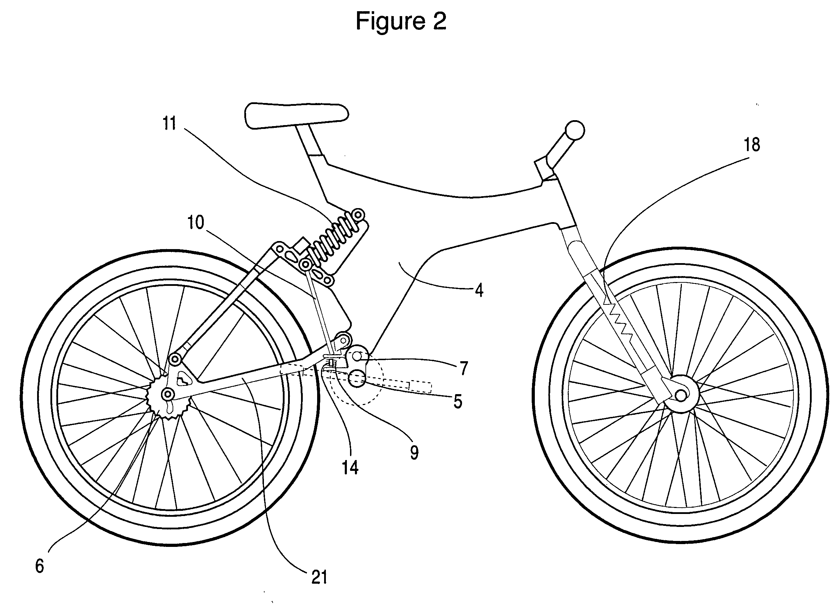

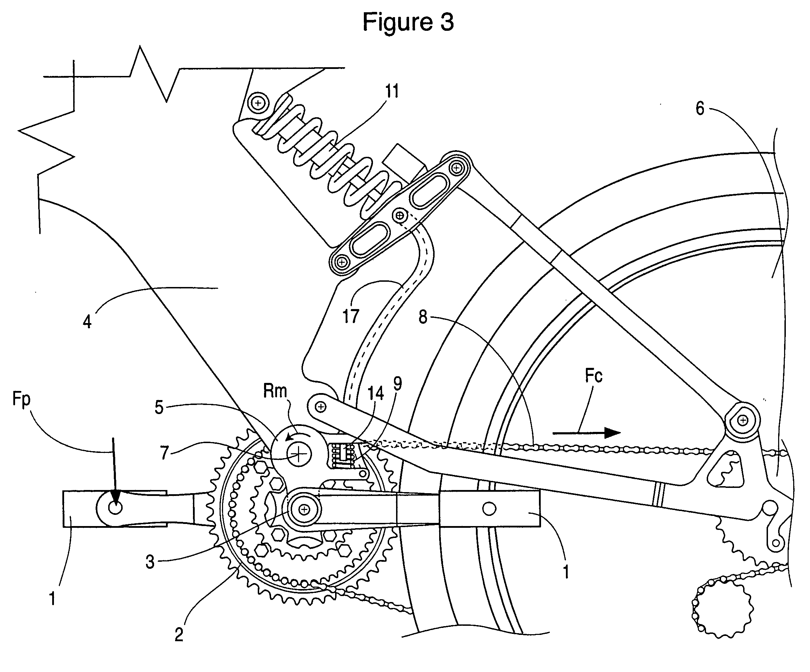

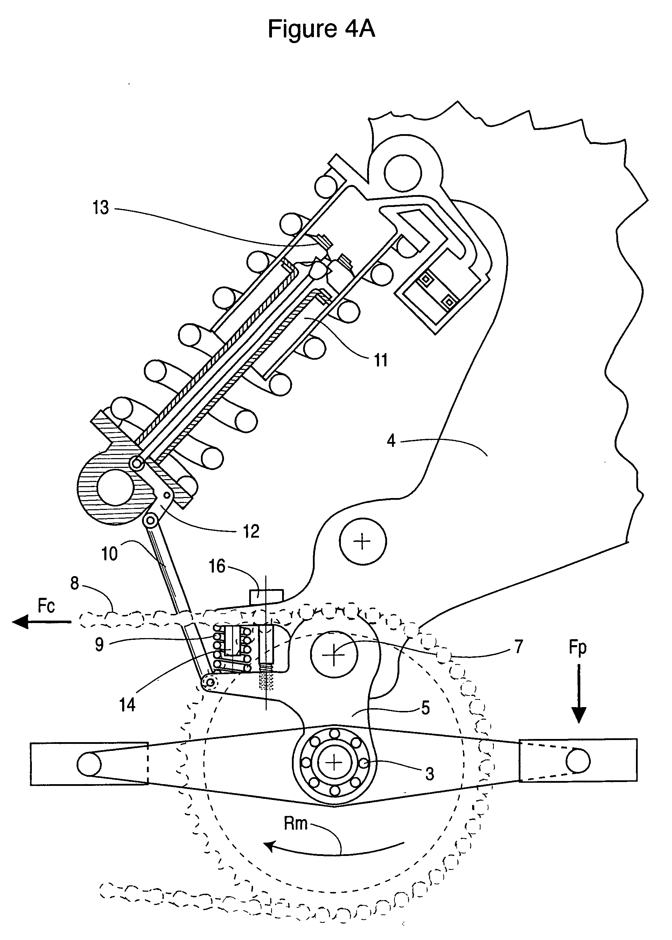

Referring to Figures 2 and 3, the pedals (1) of a bicycle are attached to a front chainwheel (2) via a crankshaft and bearings (3) which is mounted to the mainframe (4) via a bottom bracket (5). In prior art arrangements, as illustrated in Figure 1, the crankshaft is normally constrained from movement in the bottom bracket in all degrees of freedom except the desired rotation for pedaling energy transfer to the rear wheel assembly (6) via the chain (8). As illustrated in Figures 2, 3, and 4A, the bottom bracket (5) is rotatably attached to the mainframe via a mounting pivot (7). The mounting pivot is located directly above the crankshaft so that the tension force (Fc) in the chain (8) caused by the pedaling force (Fp) creates rotational motion (Rm) of the bottom bracket (5) around the mounting pivot (7), as best illustrated in Figure 4A. A control spring (9) is mounted between the bottom bracket and mainframe so that the tension in the chain creates proportional rotational motion of the bottom bracket around the mounting pivot. The force/displacement rate of the control spring is chosen to accommodate the maximum desired pedaling force threshold within the rotational travel limits of the bottom bracket which is to be less than twenty-five degrees for normal pedaling force (Fp) inputs. This motion is indiscernible to the rider during pedaling. A connector rod (10) transmits the bottom bracket motion to the suspension's shock absorber (11). An internal linkage (12) in the shock absorber operates a valve (13) that inhibits fluid flow. Limiting the flow creates a hydraulic lock that slows or stops all suspension motion, referred to as lockout whether the flow is slowed or stopped.

The addition of a control damper (14) in parallel with the control spring (9) is desirable as it increases the dynamic time constant of the pivoting bottom bracket (5) so that the valve (13) motion is not overly rapid or oscillatory.

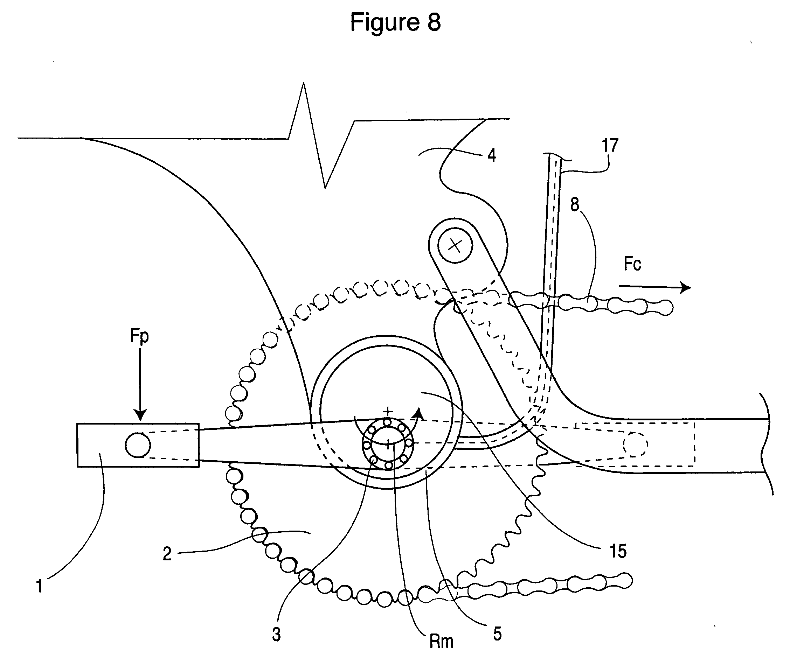

In an alternative configuration, as illustrated in Figure 8, the crankshaft and bearings (3) are mounted eccentrically inside the bottom bracket (5). The bottom bracket is mounted solidly to the mainframe as in a conventional bicycle. An elastomeric material (15) such as synthetic rubber is utilized to attach the crankshaft and bearings (3) to the bottom bracket (5). The elastomeric material allows the crankshaft and bearings to eccentrically rotate in the bottom bracket in response to tension force (Fc) in the chain (8) caused by the pedaling force (Fp). The force/displacement rate of the elastomeric material is chosen to limit the eccentric motion of the crankshaft and bearings (3) to less than twenty-five degrees for normal pedaling force (Fp) inputs. Additionally, the elastomeric material can be chosen and designed to provide the correct level of damping required by the system as the characteristic is inherent to this type of material. A connector rod (10) transmits the eccentric motion of the crankshaft and bearings (3) to the suspension's shock absorber (11). An internal linkage (12) in the shock absorber (11) operates a valve (13) that significantly inhibits fluid flow. This blocking of the flow creates a hydraulic lock that limits or stops all suspension motion.

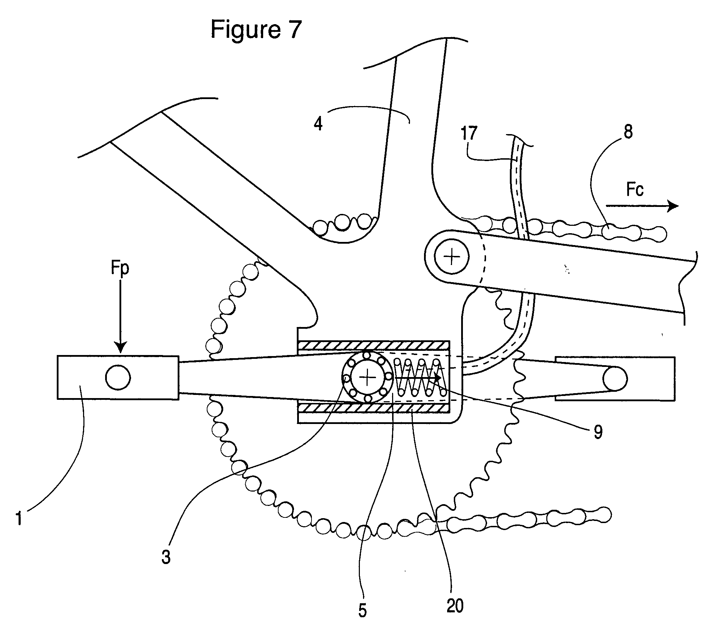

In a further alternative configuration as illustrated in Figure 7, the crankshaft and bearings are mounted inside a bottom bracket (5) which is slideably attached to the mainframe (4) via a linear bearing (20) that moves parallel to the tight span of the chain in response to the tension force (Fc) in the chain. A control spring (9) is mounted between the bottom bracket (5) and the mainframe (4). The force displacement rate of the control spring is chosen to accommodate the largest possible pedaling force threshold within the travel range of the linear bearing which is small enough to be indiscernible to the rider. A connector rod (10) or cable (17) transmits the linear motion of the crankshaft and bearings (3) to the suspension's shock absorber (11).

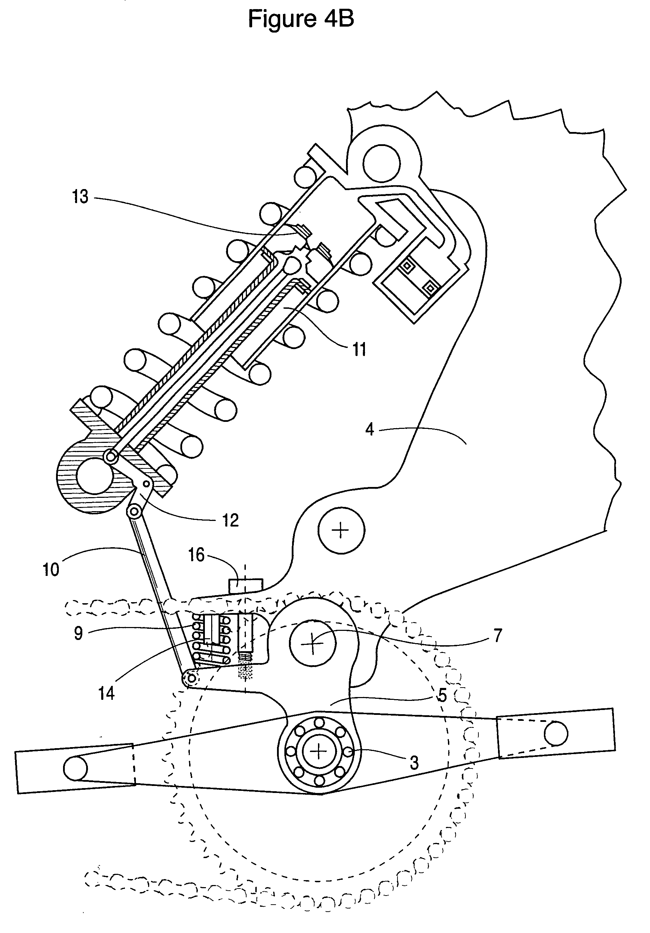

A pre-load setting mechanism (16) capable of adjusting the pre-load of the control spring (9) or elastomeric material (15) is desirable to adjust the threshold at which the pedaling force (Fp) cause the valve (13) to hydraulically lock the suspension, as illustrated in Figures 4A and 4B. By correctly choosing the force/displacement rate of the control spring or elastomeric material and adjusting the preload, actuation of the valve (13) can be achieved at any desired pedaling force threshold.

An alternative to the connector rod (10) solution of transferring the pedal force induced rotary motion is to utilize a cable (17), as illustrated in Figure 3. This arrangement is especially well suited to actuating the valve (13) in a front suspension system due to the relative motion between the forks (18) and mainframe required by the steering system.

## Claims

1. An automatic suspension lockout assembly for bicycles comprises a crank assembly compliantly mounted to a frame such that a combination of pedaling forces and uphill bicycle inclination creates a small motion suitable for controlling a hydraulic valve in a shock absorber of a bicycle suspension assembly resulting in lockout of the suspension.

2. The automatic suspension lockout assembly for bicycles of Claim 1, comprising:
a) the crank assembly mounted in a bottom bracket adapted to be rotatably attached to the frame via a mounting pivot;
b) a chain adapted for power transfer linking the chainwheel to a rear wheel assembly; and
c) a resilient member adapted to create a predetermined stiffness between the bottom bracket and the frame so that rotational motion of the bottom bracket is limited;
such that the relative movement between the bottom bracket and the frame caused by a tension force in the chain during pedaling is transferred via a linkage to a hydraulic valve in the suspension shock absorber.

3. The automatic suspension lockout assembly for bicycles of Claim 2, wherein the resilient member comprises a coil spring configured with a force/displacement rate capable of limiting the rotational motion of the bottom bracket to less than twenty-five degrees at full pedaling effort.

4. The automatic suspension lockout assembly for bicycles of Claim 3, wherein a control damper is attached in parallel to the coil spring to slow valve motion and reduce oscillation caused by varying chain tension throughout the pedal stroke.

5. The automatic suspension lockout assembly for bicycles of Claim 3, wherein an adjuster mechanism, attached in parallel to the coil spring, is adapted to impart preload on the spring and thereby set a pedaling force threshold required to induce rotary motion of the bottom bracket relative to the frame.

6. The automatic suspension lockout assembly for bicycles of Claim 4, wherein an adjuster mechanism, attached in parallel to the coil spring, is adapted to impart preload on the spring and thereby set a pedaling force threshold required to induce rotary motion of the bottom bracket relative to the frame.

7. The automatic suspension lockout assembly for bicycles of Claim 5, wherein the adjuster mechanism comprises a screw acting directly on the coil spring to impart preload.

8. The automatic suspension lockout assembly for bicycles of Claim 6, wherein the adjuster mechanism comprises a screw acting directly on the coil spring to impart preload.

9. The automatic suspension lockout assembly for bicycles of Claim 2, wherein the linkage comprises a rod attached directly to the bottom bracket and connected to a rocker on the shock absorber that directly acts on a valve push rod internal to the shock absorber.

10. The automatic suspension lockout assembly for bicycles of Claim 3, wherein the linkage comprises a rod attached directly to the bottom bracket and connected to a rocker on the shock absorber that directly acts on a valve push rod internal to the shock absorber.

11. The automatic suspension lockout assembly for bicycles of Claim 4, wherein the linkage comprises a rod attached directly to the bottom bracket and connected to a rocker on the shock absorber that directly acts on a valve push rod internal to the shock absorber.

12. The automatic suspension lockout assembly for bicycles of Claim 5, wherein the linkage comprises a rod attached directly to the bottom bracket and connected to a rocker on the shock absorber that directly acts on a valve push rod internal to the shock absorber.

13. The automatic suspension lockout assembly for bicycles of Claim 6, wherein the linkage comprises a rod attached directly to the bottom bracket and connected to a rocker on the shock absorber that directly acts on a valve push rod internal to the shock absorber.

14. The automatic suspension lockout assembly for bicycles of Claim 7, wherein the linkage comprises a rod attached directly to the bottom bracket and connected to a rocker on the shock absorber that directly acts on a valve push rod internal to the shock absorber.

15. The automatic suspension lockout assembly for bicycles of Claim 8, wherein the linkage comprises a rod attached directly to the bottom bracket and connected to a rocker on the shock absorber that directly acts on a valve push rod internal to the shock absorber.

16. The automatic suspension lockout assembly for bicycles of Claim 2, wherein the linkage comprises a cable attached directly to the bottom bracket and connected directly to a valve push rod internal to the shock absorber.

17. The automatic suspension lockout assembly for bicycles of Claim 3, wherein the linkage comprises a cable attached directly to the bottom bracket and connected directly to a valve push rod internal to the shock absorber.

18. The automatic suspension lockout assembly for bicycles of Claim 4, wherein the linkage comprises a cable attached directly to the bottom bracket and connected directly to a valve push rod internal to the shock absorber.

19. The automatic suspension lockout assembly for bicycles of Claim 5, wherein the linkage comprises a cable attached directly to the bottom bracket and connected directly to a valve push rod internal to the shock absorber.

20. The automatic suspension lockout assembly for bicycles of Claim 6, wherein the linkage comprises a cable attached directly to the bottom bracket and connected directly to a valve push rod internal to the shock absorber.

21. The automatic suspension lockout assembly for bicycles of Claim 7, wherein the linkage comprises a cable attached directly to the bottom bracket and connected directly to a valve push rod internal to the shock absorber.

22. The automatic suspension lockout assembly for bicycles of Claim 8, wherein the linkage comprises a cable attached directly to the bottom bracket and connected directly to a valve push rod internal to the shock absorber.

23. The automatic suspension lockout assembly for bicycles of Claim 1, comprising:
a) the crank assembly eccentrically mounted internally in a bottom bracket rigidly attached to the frame;
b) a chain adapted for power transfer linking the chainwheel to a rear wheel assembly;
c) an elastomeric material adapted to attach the crank assembly to the bottom bracket so that eccentric rotational motion of said assembly is limited;
such that movement of the pedal, chainwheel, crankshaft and bearing assembly relative to the bottom bracket and frame caused by a tension force in the chain during pedaling is transferred via a linkage to a hydraulic valve in a suspension shock absorber to lock out suspension movement.

24. The automatic suspension lockout assembly for bicycles of Claim 23, wherein the elastomeric material comprises rubber configured with a force/displacement rate adapted to limit the rotational motion of the bottom bracket to less than twenty-five degrees at full pedaling effort.

25. The automatic suspension lockout assembly for bicycles of Claim 23, wherein the elastomeric material comprises a thermoplastic elastomer configured with a force/displacement rate adapted to limit the rotational motion of the bottom bracket to less than twenty-five degrees at full pedaling effort.

26. The automatic suspension lockout assembly for bicycles of Claim 1, comprising:
a) the crank assembly mounted internally in a bottom bracket rigidly attached to the frame via a linear bearing;
b) a chain adapted for power transfer linking the chainwheel to a rear wheel assembly;
c) a control spring or elastomeric material positioned between the bottom bracket and the frame such that linear motion of said pedal, chainwheel, crankshaft and bearing assembly is limited;
such that movement of the crank assembly relative to the bottom bracket and frame caused by a tension force in the chain during pedaling is transferred via a linkage to a hydraulic valve in a suspension shock absorber to lock out suspension movement.

27. The automatic suspension lockout assembly for bicycles of Claim 23, wherein an adjuster mechanism attached in parallel to the elastomeric material is adapted to impart preload on the elastomeric material and thereby set a pedaling force threshold required to induce motion of the crank assembly relative to the frame.

28. The automatic suspension lockout assembly for bicycles of Claim 24, wherein an adjuster mechanism attached in parallel to the elastomeric material is adapted to impart preload on the elastomeric material and thereby set a pedaling force threshold required to induce motion of the crank assembly relative to the frame.

29. The automatic suspension lockout assembly for bicycles of Claim 25, wherein an adjuster mechanism attached in parallel to the elastomeric material is adapted to impart preload on the elastomeric material and thereby set a pedaling force threshold required to induce motion of the crank assembly relative to the frame.

30. The automatic suspension lockout assembly for bicycles of Claim 26, wherein an adjuster mechanism attached in parallel to the elastomeric material is adapted to impart preload on the elastomeric material and thereby set a pedaling force threshold required to induce motion of the crank assembly relative to the frame.

31. The automatic suspension lockout assembly for bicycles of Claim 27, wherein the adjuster mechanism comprises a screw bridging between the crank assembly and the bottom bracket.

32. The automatic suspension lockout assembly for bicycles of Claim 28, wherein the adjuster mechanism comprises a screw bridging between the crank assembly and the bottom bracket.

33. The automatic suspension lockout assembly for bicycles of Claim 29, wherein the adjuster mechanism comprises a screw bridging between the crank assembly and the bottom bracket.

34. The automatic suspension lockout assembly for bicycles of Claim 30, wherein the adjuster mechanism comprises a screw bridging between the crank assembly and the bottom bracket.

35. The automatic suspension lockout assembly for bicycles of Claims 23 to 34, wherein the linkage comprises a rod attached directly to the crank assembly and connected to a rocker on the shock absorber that directly acts on a valve push rod internal to the shock absorber.

36. The automatic suspension lockout assembly of Claims 23 to 34, wherein the linkage comprises a cable attached directly to the crank assembly and connected directly to a valve push rod internal to the shock absorber.
